# EUROPEAN PATENT SPECIFICATION

(11) **EP 2 752 125 B1**
(45) Date of publication and mention of the grant of the patent: **10.05.2017**
(21) Application number: 13169628.8
(22) Date of filing: 29.05.2013
(51) Int. Cl.: A43B 23/02, B29D 35/06, B29D 35/08, B29D 35/10

(54) **Shoes of automated process production and shoemaking method thereof**
Schuhe mit automatischem Herstellungsverfahren und Schuhherstellungsverfahren dafür
Chaussures de production d'un procédé automatisé et sa méthode de fabrication de chaussures

(30) Priority: 04.01.2013 TW 102100333
(43) Date of publication of application: 09.07.2014
(73) Proprietor: Long John Tsung Right Industrial Co., Ltd., Chang-Hwa (TW); Jen Yuan Plastics Co., Ltd., Taichung City (TW)
(72) Inventor: WEN, Wen-Tsao, Chang-Hwa (TW); YANG, Teng Jen, Taichung City (TW)
(74) Representative: advotec.

(56) References cited:
- EP-A1- 0 787 577
- US-A- 3 812 604
- US-A- 6 007 748
- US-A1- 2004 143 995
- US-A1- 2007 180 730
- US-A1- 2009 071 035
- US-A1- 2010 154 256
- US-A1- 2011 247 236
- US-A1- 2012 255 201

## Description

### FIELD OF THE INVENTION

The present invention relates to shoes of an automated process production and a shoemaking method thereof, and more particularly to the shoes of an automated process production and the shoemaking method thereof in which coating a plastic material on a shoe-upper material and gluing a shoe sole to a footrest underside may be performed simultaneously.

### BACKGROUND OF THE INVENTION

In the conventional shoemaking procedure, a glue or adhesive must be applied onto a shoe-upper material and a sole must before attaching them with one another, and a surface treatment of the sole is performed, so that the glue or adhesive can be coupled to the sole securely.

However, the use of the glue or adhesive and the surface treatment of the sole may cause environmental pollutions, and the gluing process generally relies on manpower for the alignment, and any poorly glued shoe-upper material and sole cannot be reworked or glued again, and thus causing a problem for controlling the yield rate. In addition, the labor cost of the manufacturing industry becomes increasingly higher, and the technical skill of the workers becomes increasingly lower. Therefore, the material, labor and manufacturing costs required in a production process become a big burden to the shoe industry.

At present, different conventional manufacturing processes fail to provide a good adhesive quality while reducing the manufacturing cost. Obviously, the yield rate and economic benefit related to shoemaking technical field require further improvements.
US 2012/0255201 A1 discloses footwear with a seamless upper and methods for making the same. There, a sole is created by injecting resin between a mold and a lower side of the shoe upper. US 6,007,748 A discloses methods and apparatus particularly for molding laminated shoe soles directly onto the remainder of the shoe, by injecting polymeric material between a sole mold and a lower part of the shoe upper. US 2010/0154256 A1 reveals an article of footwear where the shoe upper is a unitary knit construction formed through a single flat knitting process. EP 0 787 577 A1 discloses a method for producing shoe soles by injection-molding by injecting thermoplastic materials around a lower part of the shoe upper.
US 2004/0143995 A1 shows a shoe construction where a shoe sole is attached to the shoe upper by injecting a plastic material between a lower part of the shoe upper and a rubber outsole. US 2007/0180730 A1 discloses articles of footwear with a sole structure and an upper having lateral and medial side elements that are engaged and mechanically or bondedly joined with the sole structure. US 2011/0247236 A1 discloses footwear and method for manufacturing the same where polymeric material is injected or poured between an outsole and a midsole part of the shoe upper. U.S. patent 3,812,604 reveals a shoe upper which is joined to an outsole by injecting a liquid synthetic hardenable material between a lower part of the shoe upper and the outsole. US 2009/0071035 A1 discloses a footwear item with an upper and an outsole where the outsole is connected to the upper by injecting plastic material between the outsole and the lower part of the shoe upper.

### SUMMARY OF THE INVENTION

In view of the aforementioned drawbacks of the prior art, it is a primary objective of the present invention to provide shoes of an automated process 2 production and a shoemaking method thereof and overcome the problems related to the complicated shoemaking process and the waste of materials, manufacturing time and labor.

To achieve the aforementioned objective, the present invention provides a shoe of an automated process production, comprising a shoe-upper material having an upper side and a lower side relative to the upper side, a shoe sole and a plastic material. The shoe-upper material is a one-piece three-dimensional structure and includes a shoe-upper and a footrest underside, and the shoe-upper is coupled to the footrest underside along an edge of the footrest underside. The shoe sole is installed at the footrest underside. The plastic material is coated onto the upper side and the lower side of the shoe-upper and onto the footrest underside and filled between footrest underside and the shoe sole, and the shoe sole is glued to the footrest underside by the plastic material, and the plastic material forms at least one three-dimensional structured support member attached onto the upper side and the lower side of the shoe-upper and onto the footrest underside to provide a supporting force to the whole shoe-upper material (11).

Preferably, the shoe-upper material has a plurality of pores.

Preferably, the plastic material is permeated into the plurality of pores of the shoe-upper material, when the plastic material is coated onto the shoe-upper and the footrest underside of the shoe-upper material.

Preferably, the shoe-upper material is a braid.

Preferably, the shoe-upper material is leather.

In addition, the present invention further provides a shoemaking method of an automated process production, comprising the steps of: providing a one-piece three-dimensional structured shoe-upper material, and the shoe-upper material including a shoe-upper having an upper side and a lower side relative to the upper side and a footrest underside, and the lower side of shoe-upper being coupled to an edge of the footrest underside along the footrest underside; providing a shoe sole, installed at the footrest underside; coating a plastic material onto the shoe-upper and the footrest underside and filling the plastic material between the footrest underside and the shoe sole by a gluing step to glue the shoe sole to the footrest underside; and forming at least one three-dimensional structured support member attached to the upper side and the lower side of the shoe-upper and the footrest underside by the plastic material to provide a supporting force to the whole shoe-upper material.

Preferably, the gluing step further comprises the steps of: setting the shoe-upper material onto a shoe shaped inner mold; putting the shoe-upper material and the shoe sole into a shaping mold body having at least one preset mold cavity, and pressing the shoe-upper material by the shaping mold body; injecting the plastic material into the at least one preset mold cavity of the shaping mold body by a plastic injection molding machine, such that the plastic material is coated onto the upper side and a lower side of the shoe-upper and the footrest underside and filled between the footrest underside and the shoe sole; and removing the shoe shaped inner mold and the shaping mold body 3 by a demolding step.

Preferably, the shoemaking method further comprises the following steps before the demolding step takes place: permeating the plastic material into a plurality of pores of the shoe-upper material, such that the plastic material is coupled to the shoe-upper material; and waiting till the plastic material is cured and shaped, such that the plastic material forms an intermediate glue layer between the footrest underside and the shoe sole to glue the shoe sole to the footrest underside.

Preferably, the shoe shaped inner mold is a movably stretchable shoe last.

Preferably, the shaping mold body includes at least three shaping mold blocks having the at least one preset mold cavity.

In summation, the shoes of an automated process production and a shoemaking method thereof in accordance with the present invention use a plastic injection molding machine to inject the plastic material into the mold and coat the plastic material onto the shoe-upper material and fill the plastic material between the shoe sole and the footrest underside to form an intermediate glue layer for gluing the shoe sole to the footrest underside, so as to achieve the effects of saving material, manufacturing and labor costs.

### BRIEF DESCRIPTION OF THE DRAWINGS

FIG. 1 is an exploded view of a shoe of an automated process production of the present invention;
FIG. 2 is a schematic view of a shoe of an automated process production of the present invention;
FIG. 3 is a cross-sectional view of a shoe of an automated process production of the present invention;
FIG. 4 is a flow chart of a shoemaking method of shoes of an automated process production in accordance with the present invention; and [0022] FIG. 5 is a flow chart of a gluing step of a shoemaking method of shoes of an automated process production in accordance with the present invention.

### DESCRIPTION OF THE PREFERRED EMBODIMENTS

The technical characteristics, contents, advantages and effects of the present invention will be apparent with the detailed description of a preferred embodiment accompanied with related drawings as follows. The drawings are provided for the illustration, and same numerals are used to represent respective elements in the preferred embodiments. It is intended that the embodiments and drawings disclosed 4 herein are to be considered illustrative rather than restrictive. Same numerals are used for representing same respective elements in the drawings.

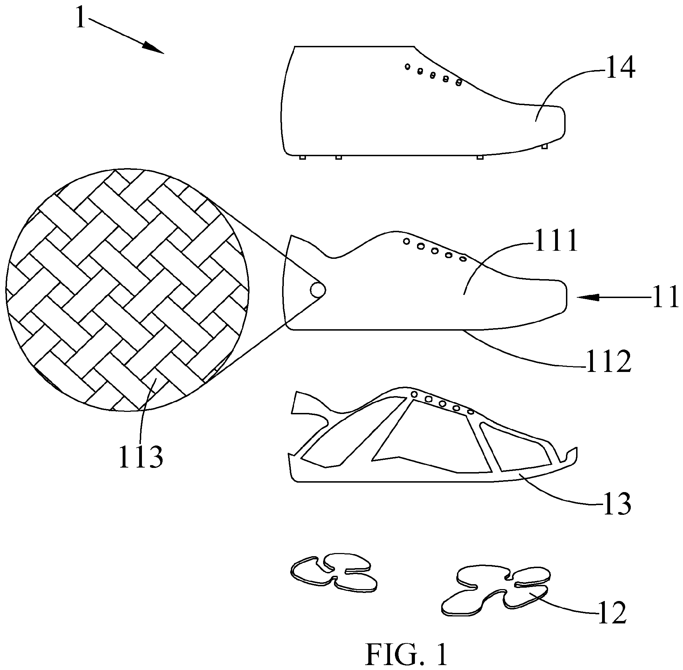

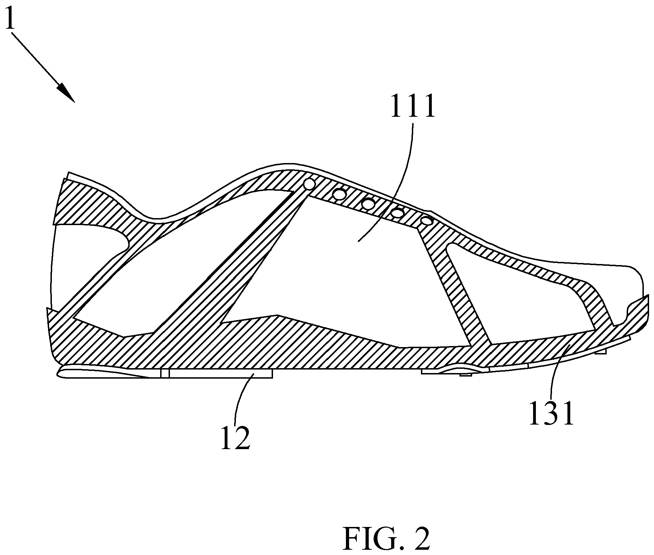

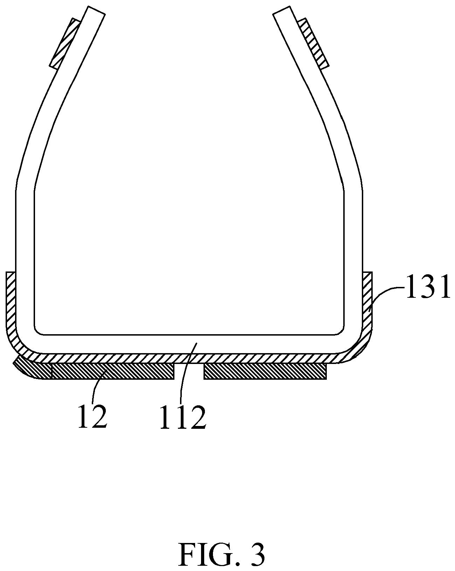

With reference to FIGS. 1 to 3 for an exploded view, a schematic view and a cross-sectional view of shoes of an automated process production of the present invention respectively, the shoes of an automated process production 1 comprises a shoe-upper material 11, a shoe sole 12 and a plastic material 13. The shoe-upper material 11 is a one-piece three-dimensional structure and includes a shoe-upper 111 and a footrest underside 112. The shoe-upper 111 is coupled to the footrest underside 112 along an edge of the footrest underside 112 and provided for covering a portion of a wearer's foot. The shoe sole 12 is installed at the footrest underside 112. The plastic material 13 is coated onto the shoe-upper 111 and the footrest underside 112 and filled between the footrest underside 112 and the shoe sole 12, and the shoe sole 12 is glued to the footrest underside 112 by the plastic material 13.

The plastic material 13 forms at least one support member 131 attached onto the shoe-upper 111 and the footrest underside 112.

In addition, the shoe-upper material 11 is a one-piece three-dimensional braid, but the invention is not limited to the braid only, but any other equivalent material such as leather can be used instead. Since the shoe-upper material 11 is formed by a weaving method, and weaving threads are usually not closely woven, therefore the shoe-upper material 11 has a plurality of pores 113.

When the melted plastic material 13 is coated onto the shoe-upper 111 and the footrest underside 112 of the shoe-upper material 11, the plastic material 13 is covered onto the shoe-upper 111 and the footrest underside 112 of the shoe-upper material 11 and also permeated into the plurality of pores 113 of the shoe-upper material 11, After the plastic material 13 is cured gradually within a period of time the plastic material 13 permeated into the plurality of pores 113 is cured to connect and seal each pore 113, so that the plastic material 13 can be attached tightly onto the shoe-upper material 11.

However, the shoe-upper material 11 is a braid with insufficient supporting force to support its own weight and the shoe-upper material 11 is a three-dimensional form, so that when after the plastic material 13 is cured, the plastic material 13 has a specific hardness to become a three-dimensional structured support member 131 for supporting the shoe-upper material 11, and the framework of the shoe-upper material 11 is generally attached onto an external surface (including the shoe-upper 111 and the footrest underside 112) of the shoe-upper material 11 to provide a supporting force to the whole shoe-upper material 11 and support the shoe-upper material 11 in a three-dimensional form.

Beside providing the supporting force to the shoe-upper material 11, the support member 131 also has other functions, such as the adjustment of the mold according to the design requirements during the manufacture, so that when the plastic material 13 is injected to the shoe-upper material 11, the plastic material 13 forms a stylish form corresponding to the mold on the shoe-upper material 11, and the plastic material 13 has a specific shape on the shoe-upper material 11, and the color of the plastic material 13 is selected to match with the color of the shoe-upper 111 while completing the coloring operation. The invention can save the manufacturing cost and time effectively. For example, the conventional shoemaking methods require attaching the stylish parts one by one onto the shoe-upper material 11, and some methods even require a sewing process to fix the parts. Now, the present invention injects the plastic material 13 directly to form the parts onto the shoe-upper material 11, not only achieving a better attachment of the parts with the shoe-upper material 11, but also saving the manpower and manufacturing time required for the attaching and sewing operations effectively.

It is noteworthy that the shoe-upper material 11 cannot support itself before the manufacture, so that it is necessary to use a shoe shaped inner mold 14 installed inside the shoe-upper material 11 to provide a supporting force during the manufacture. The detailed description of the shoemaking method of an automated process production is given below.

Even though the concept of shoemaking method of an automated process production of the present invention has been described in the process of describing the shoes of an automated process production of the present invention, the following flow charts are provided to give a more detailed description of the shoemaking method.

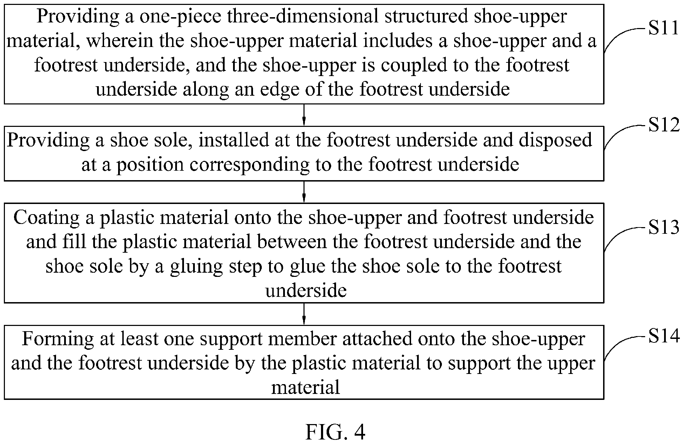

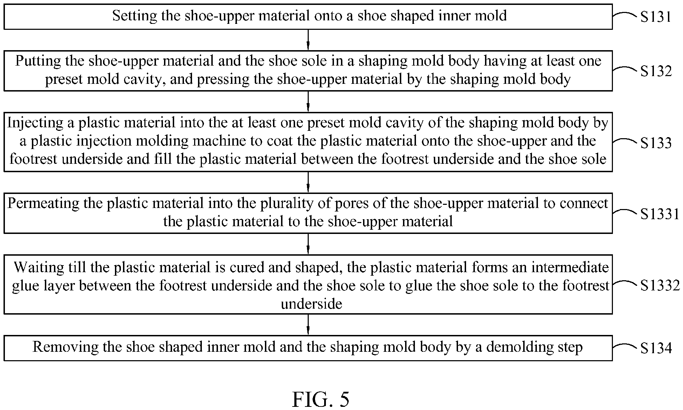

With reference to FIGS. 4 and 5 for the flow charts of a shoemaking method of an automated process production and a gluing step of the shoemaking method of an automated process production in accordance with the present invention respectively, the shoemaking method of an automated process production of the invention comprises the following steps:
S 11: Providing a one-piece three-dimensional structured shoe-upper material, wherein the shoe-upper material includes a shoe-upper and a footrest underside, and the shoe-upper is coupled to the footrest underside along an edge of the footrest underside.

S12: Providing a shoe sole, installed at the footrest underside and disposed at a position corresponding to the footrest underside.

S 13: Coating a plastic material onto the shoe-upper and footrest underside 6 and filling the plastic material between the footrest underside and the shoe sole by a gluing step to glue the shoe sole to the footrest underside.

514: Forming at least one support member attached onto the shoe-upper and the footrest underside by the plastic material to support the upper material.

In addition, the gluing step further comprises the following steps:
S 131: Setting the shoe-upper material onto a shoe shaped inner mold, wherein the shoe shaped inner mold can be a movably stretchable shoe last, and adjust the size of the shoe-upper material to fit different sizes of shoes.

S132: Putting the shoe-upper material and the shoe sole in a shaping mold body having at least one preset mold cavity, and pressing the shoe-upper material by the shaping mold body, wherein the shaping mold body includes at least three movable shaping mold blocks having the at least one preset mold cavity. For example, this embodiment adopts three mold blocks for pressing both sides of the shoe-upper and the footrest underside respectively, but the quantity of mold blocks is not limited to three but it can be adjusted according to actual requirements. It is noteworthy to point out that the shoe sole is placed onto one of the mold blocks corresponding to the footrest underside.

S133: Injecting a plastic material into the at least one preset mold cavity of the shaping mold body by a plastic injection molding machine to coat the plastic material onto the shoe-upper and the footrest underside and fill the plastic material between the footrest underside and the shoe sole.

S134: Removing the shoe shaped inner mold and the shaping mold body by a demolding step.

Before the demolding step takes place, the shoemaking method of the invention further comprises the following steps:
S1331: Permeating the plastic material into the plurality of pores of the shoe-upper material to connect the plastic material to the shoe-upper material.

S1332: Waiting till the plastic material is cured and shaped, the plastic material forms an intermediate glue layer between the footrest underside and the shoe sole to glue the shoe sole to the footrest underside.

For short, the shoe-upper material and the shoe sole are placed into predetermined positions in the mold, and then an injection molding method is used to inject the melted plastic material into the mold and shape and cure the plastic material in the mold, while the plastic material is tightly fixed onto the shoe-upper material, and the shoe sole is also tightly fixed onto the plastic material of the footrest underside. Therefore, the manufacturing process can be simplified to facilitate the manufacture, and the plastic material can be used effectively to support the shoe-upper material and fix the shoe sole, while giving a decorative effect.

The detailed description and implementation of the shoemaking method of an automated process production of the present invention have been described previously in the section of the shoes of an automated process production of the present invention, and thus will not be repeated.

## Claims

1. A shoe of an automated process production (1), comprising:
a shoe-upper material (11), being one-piece three-dimensional structure, and including a shoe-upper (111) having an upper side and a lower side relative to the upper side and a footrest underside (112), and the lower side of the shoe-upper (111) being coupled to the footrest underside (112) along an edge of the footrest underside (112);
a shoe sole (12), installed at the footrest underside (112); and
a plastic material (13) having a specific hardness, coated onto the upper side and the lower side of the shoe-upper (111) and the footrest underside (112) and filled between the footrest underside (112) and the shoe sole (12) such that the shoe sole (12) is glued to the footrest underside (112) by the plastic material (13), and the plastic material (13) forming at least one three-dimensional structured support member (131) is attached onto the upper side and the lower side of the shoe-upper (111) and the footrest underside (112) to provide a supporting force to the whole shoe-upper material (11);
wherein the shoe-upper material (11) has a plurality of pores (113), and the plastic material (13) is permeated into the plurality of pores (113) of the shoe-upper material (11).

2. The shoe of an automated process production (1) according to claim 1, wherein the shoe-upper material (11) is a braid.

3. The shoe of an automated process production (1) according to claim 1, wherein the shoe-upper material (11) is leather.

4. A shoemaking method of an automated process production, comprising the steps of:
providing a one-piece three-dimensional structured shoe-upper material (11) having a plurality of pores (113), and the shoe-upper material (11) including a shoe-upper (111) having an upper side and a lower side relative to the upper side and a footrest underside (112), and the lower side of the shoe-upper (111) being coupled to an edge of the footrest underside (112) along the footrest underside (112);
providing a shoe sole (12), installed at the footrest underside (112);
setting the shoe-upper material (11) onto a shoe shaped inner mold (14);
putting the shoe-upper material (11) and the shoe sole (12) into a shaping mold body having at least one preset mold cavity, and pressing the shoe-upper material (11) by the shaping mold body; gluing the sole to the footrest underside with the steps A,B,C,D;
A- injecting a plastic material (13) into the at least one preset mold cavity of the shaping mold body by a plastic injection molding machine such that the plastic material (13) is coated onto the upper side and the lower side of the shoe-upper (111) and the footrest underside (112) and filling between the footrest underside (112) and the shoe sole (12) simultaneously;
B- permeating the plastic material (13) into a plurality of pores (113) of the shoe-upper material (11) such that the plastic material (13) is coupled to the shoe-upper material (11);
C- waiting till the plastic material (13) is cured and shaped such that the plastic material (13) forms an intermediate glue layer between the footrest underside (112) and the shoe sole (12) to glue the shoe sole (12) to the footrest underside (112);
D- removing the shoe shaped inner mold (14) and the shaping mold body by a demolding step; and
forming at least one three-dimensional structured support member (131) attached to the upper side and the lower side of the shoe-upper (111) by the plastic material (3) having a specific hardness to provide a supporting force to the whole shoe-upper material (11).

5. The shoemaking method of an automated process production according to claim 4, wherein the shoe shaped inner mold (14) is a movably stretchable shoe last.

6. The shoemaking method of an automated process production according to claim 4, wherein the shaping mold body includes at least three movable shaping mold blocks having the at least one preset mold cavity.

## Patentansprüche

1. In einem automatisierten Prozess herstellbarer Schuh (1), umfassend:
ein Schaftmaterial (11), welches eine einstückige dreidimensionale Struktur bildet und einen Schaft (111) mit einer oberen Seite und einer unteren Seite relativ zu der oberen Seite sowie eine Fußauflagenunterseite (112) aufweist, wobei die untere Seite des Schafts (111) entlang eines Rands der Fußauflagenunterseite (112) mit der Fußauflagenunterseite (112) verbunden ist;
eine Schuhsohle (12), welche an der Fußauflagenunterseite (112) angebracht ist; und
ein Kunststoffmaterial (13) mit einer spezifischen Härte, welches auf die obere Seite und die untere Seite des Schafts (111) und auf die Fußauflagenunterseite (112) aufgebracht und derart zwischen die Fußauflagenunterseite (112) und die Schuhsohle (12) gefüllt ist, dass die Schuhsohle (12) durch das Kunststoffmaterial (13) mit der Fußauflagenunterseite (112) verklebt ist, wobei das mindestens ein dreidimensionales strukturiertes Stützelement (131) ausbildende Kunststoffmaterial (13) zur Beaufschlagung des gesamten Schaftmaterials (11) mit einer Stützkraft an der oberen Seite und der unteren Seite des Schafts (111) sowie an der Fußauflagenunterseite (112) befestigt ist;
wobei das Schaftmaterial (11) eine Vielzahl von Poren (113) aufweist und das Kunststoffmaterial (13) die Vielzahl von Poren (113) des Schaftmaterials (11) durchdringt.

2. In einem automatisierten Prozess herstellbarer Schuh (1) nach Anspruch 1, wobei das Schaftmaterial (11) ein Gewebe ist.

3. In einem automatisierten Prozess herstellbarer Schuh (1) nach Anspruch 1, wobei das Schaftmaterial (11) Leder ist.

4. Schuhherstellungsverfahren für eine Herstellung in einem automatisierten Prozess, die folgenden Schritte umfassend:
Bereitstellen eines einstückigen dreidimensionalen strukturierten Schaftmaterials (11) mit einer Vielzahl von Poren (113), wobei das Schaftmaterial (11) einen Schaft (111) mit einer oberen Seite und einer unteren Seite relativ zu der oberen Seite sowie eine Fußauflagenunterseite (112) aufweist und die untere Seite des Schafts (111) entlang der Fußauflagenunterseite (112) mit einem Rand der Fußauflagenunterseite (112) verbunden ist;
Bereitstellen einer Schuhsohle (12), welche an der Fußauflagenunterseite (112) angebracht ist;
Anordnen des Schaftmaterials (11) auf einer schuhförmigen Innenform (14);
Einlegen des Schaftmaterials (11) und der Schuhsohle (12) in einen Formkörper mit mindestens einem vorbestimmten Formhohlraum und Pressen des Schaftmaterials (11) mittels des Formkörpers;
Verkleben der Sohle mit der Fußauflagenunterseite nach den Schritten A, B, C, D:
A- Einspritzen eines Kunststoffmaterials (13) in den mindestens einen vorbestimmten Formhohlraum des Formkörpers mittels einer Kunststoffspritzgießmaschine, so dass das Kunststoffmaterial (13) auf die obere Seite und die untere Seite des Schafts (111) sowie auf die Fußauflagenunterseite (112) aufgebracht und gleichzeitig zwischen die Fußauflagenunterseite (112) und die Schuhsohle (12) gefüllt wird;
B- Durchdringen einer Vielzahl von Poren (113) des Schaftmaterials (11) mit dem Kunststoffmaterial (13), so dass sich das Kunststoffmaterial (13) mit dem Schaftmaterial (11) verbindet;
C- Warten, bis das Kunststoffmaterial (13) ausgehärtet und derart geformt ist, dass das Kunststoffmaterial (13) zum Verkleben der Schuhsohle (12) mit der Fußauflagenunterseite (112) eine zwischenliegeride Klebstoffschicht zwischen der Fußauflagenunterseite (112) und der Schuhsohle (12) bildet;
D- Entfernen der schuhförmigen Innenform (14) und des Formkörpers in einem Entformungsschritt; und
Ausbilden von mindestens einem an der oberen Seite und der unteren Seite des Schafts (111) befestigten dreidimensionalen strukturierten Stützelement (131) durch das Kunststoffmaterial (13) mit einer bestimmten Härte zum Beaufschlagen des gesamten Schaftmaterials (11) mit einer Stützkraft.

5. Schuhherstellungsverfahren für eine Herstellung in einem automatisierten Prozess nach Anspruch 4, wobei die schuhförmige Innenform (14) ein beweglich streckbarer Schuhleisten ist.

6. Schuhherstellungsverfahren für eine Herstellung in einem automatisierten Prozess nach Anspruch 4, wobei der Formkörper mindestens drei bewegliche Formblöcke umfasst, welche den mindestens einen vorbestimmten Formhohlraum aufweisen.

## Revendications

1. Chaussure d'une production par processus automatisé (1), comprenant :
un matériau de tige (11) étant une structure intégrale tridimensionnelle et comprenant une tige (111) ayant une face supérieure et une face inférieure relative à la face supérieure et un dessous de support de pied (112), et la face inférieure de la tige (111) étant reliée au dessous de support de pied (112) le long d'un bord du dessous de support de pied (112) ;
une semelle de chaussure (12) installée sur le dessous de support de pied (112) ; et
une matière plastique (13) ayant une dureté spécifique, appliquée sur la face supérieure et la face inférieure de la tige (11) et sur le dessous de support de pied (112) et introduite entre le dessous de support de pied (112) et la semelle de chaussure (12) de telle manière que la semelle de chaussure (12) est collée sur le dessous de support de pied (112) par la matière plastique (13), et la matière plastique (13) formant au moins un élément de support (131) structuré tridimensionnel est attachée à la face supérieure et la face inférieure de la tige (111) et au dessous de support de pied (112) afin de fournir une force de support à tout le matériau de tige (11) ;
dans laquelle le matériau de tige (11) a une pluralité de pores (113) et la matière plastique (13) s'infiltre dans la pluralité de pores (113) du matériau de tige (11).

2. Chaussure d'une production par processus automatisé (1) selon la revendication 1, dans laquelle le matériau de tige (11) est un tissu.

3. Chaussure d'une production par processus automatisé (1) selon la revendication 1, dans laquelle le matériau de tige (11) est le cuir.

4. Procédé de fabrication de chaussures d'une production par processus automatisé, comprenant les étapes de :
préparer un matériau de tige (11) intégral tridimensionnel structuré ayant une pluralité de pores (13), et le matériau de tige (11) comprenant une tige (111) ayant une face supérieure et une face inférieure relative à la face supérieure et un dessous de support de pied (112), et la face inférieure de la tige (111) étant reliée à un bord du dessous de support de pied (112) le long du dessous de support de pied (112) ;
préparer une semelle de chaussure (12) installée sur le dessous de support de pied (112) ;
mettre le matériau de tige (11) sur un moule intérieur (14) en forme de chaussure ;
placer le matériau de tige (11) et la semelle de chaussure (12) dans un corps de moule de façonnement ayant au moins une cavité de moule prédéfinie, et comprimer le matériau de tige (11) par le corps de moule de façonnement ;
coller la semelle sur le dessous de support de pied par les étapes A, B, C, D ;
A- injecter une matière plastique (13) dans ladite au moins une cavité de moule prédéfinie du corps de moule de façonnement par une machine de moulage par injection plastique de telle manière que la matière plastique (13) est appliquée sur la face supérieure et la face inférieure de la tige (111) et sur le dessous de support de pied (112) et est introduite simultanément entre le dessous de support de pied (112) et la semelle de chaussure (12) ;
B- permettre à la matière plastique (13) de s'infiltrer dans une pluralité de pores (113) du matériau de tige (11) de telle manière que la matière plastique (13) et reliée au matériau de tige (11) ;
C- attendre que la matière plastique (13) est durcie et façonnée de telle manière que la matière plastique (13) forme une couche de colle intermédiaire entre le dessous de support de pied (112) et la semelle de chaussure (12) afin de coller la semelle de chaussure (12) sur le dessous de support de pied (112) ;
D- enlever le moule intérieur (14) en forme de chaussure et le corps de moule de façonnement dans une étape de démoulage ; et
former au moins un élément de support (131) tridimensionnel structuré attaché à la face supérieure et la face inférieure de la tige (111) par la matière plastique (13) ayant une dureté spécifique afin de fournir une force de support à tout le matériau de tige (11).

5. Procédé de fabrication de chaussures d'une production par processus automatisé selon la revendication 4, dans lequel le moule intérieur (14) en forme de chaussure est une forme de chaussure extensible de manière mobile.

6. Procédé de fabrication de chaussures d'une production par processus automatisé selon la revendication 4, dans lequel le corps de moule de façonnement comprend au moins trois blocs de moule de façonnement mobiles ayant ladite au moins une cavité de moule prédéfinie.
